# EUROPÄISCHE PATENTSCHRIFT

(11) **EP 2 319 115 B1**
(45) Veröffentlichungstag und Bekanntmachung des Hinweises auf die Patenterteilung: **06.07.2016**
(21) Anmeldenummer: 09778181.9
(22) Anmeldetag: 28.08.2009
(51) Int. Cl.: H01M 8/1004, H01M 8/247, H01M 4/86, H01M 4/88, H01M 4/92, H01M 8/0297

(54) **BRENNSTOFFZELLENANORDNUNG UND VERFAHREN ZU DEREN HERSTELLUNG**
FUEL CELL ARRANGEMENT AND METHOD FOR THE PRODUCTION THEREOF
AGENCEMENT DE PILES À COMBUSTIBLE ET PROCÉDÉ DE FABRICATION ASSOCIÉ

(30) Priorität: 28.08.2008 DE 102008044747
(43) Veröffentlichungstag der Anmeldung: 11.05.2011
(73) Patentinhaber: Fraunhofer-Gesellschaft zur Förderung der angewandten Forschung e.V., 80686 München (DE)
(72) Erfinder: ZSCHIESCHANG, Eva, 01324 Dresden (DE); GERTEISEN, Dietmar, 79312 Emmendingen (DE); ZEDDA, Mario, 79111 Freiburg (DE); ACKERMANN, Volker, 95643 Tirschenreuth (DE)
(74) Vertreter: Pfenning, Meinig & Partner mbB
(86) Internationale Anmeldenummer: PCT/EP2009/006251
(87) Internationale Veröffentlichungsnummer: WO 2010/022965

(56) Entgegenhaltungen:
- EP-A1- 1 037 295
- EP-B1- 1 508 181
- WO-A1-96/18217
- US-A1- 2003 044 672
- RYAN O'HAYRE, TIBOR FABIAN, SANG-JOON LEE AND FRITZ B. PRINZ: "Lateral Ionic Conduction in Planar Array Fuel Cells" JOURNAL OF THE ELECTROCHEMICAL SOCIETY, Bd. 150, Nr. 4, 2003, Seiten A430-A438, XP002553060 in der Anmeldung erwähnt

## Beschreibung

Die vorliegende Erfindung betrifft eine Brennstoffzellenanordnung mit einer Polymerelektrolytmembran, auf deren Oberfläche zumindest einseitig bereichsweise mindestens eine Katalysatorschicht angeordnet ist, mindestens zwei Stromkollektoren sowie mindestens einer Fluidverteilungsstruktur. Die Erfindung betrifft ebenso ein Verfahren zur Herstellung derartiger Brennstoffzellenanordnungen.

Brennstoffzellensysteme gewinnen zunehmend an Bedeutung bei der Spannungsversorgung mobiler Elektro- bzw. Elektronikgeräte. Zur Erlangung handelsüblicher Spannungen werden zur Addition von Einzelspannungen mehrere Brennstoffzellen in Serie geschaltet. Bei einer planaren Brennstoffzellenanordnung wird dies realisiert, indem mehrere in einer Ebene angeordnete Brennstoffzelleneinheiten seriell verschaltet werden.

Jede Brennstoffzelleneinheit verfügt kathoden- und anodenseitig über je eine Gasverteilerstruktur und eine Diffusionsschicht. Diese beiden Reaktionsräume sind getrennt durch eine Membranelektrodeneinheit (MEA). Dies ist eine protonenleitende Polymermembran, welche im Bereich der Reaktionsräume katalytisch beschichtet ist. Eine bekannte Anordnung zur Serienverschaltung von Brennstoffzelleneinheiten ist die sogenannte "Streifenmembran-Brennstoffzelle". Bei dieser durchstößt eine Querleiterstruktur die Membranebene und verbindet dadurch die Kathodenseite einer ersten Brennstoffzelleneinheit mit der Anodenseite der benachbarten Brennstoffzelleneinheit. Das Hindurchführen eines Querleiters durch die Membranebene führt allerdings leicht zu Undichtigkeiten des Brennstoffzellensystems.

So werden beispielsweise bei Brennstoffzellen, die mit Wasserstoff und Sauerstoff arbeiten, zur Vermeidung der unkontrollierten Reaktion zwischen Wasserstoff und Sauerstoff die Reaktionsräume der Anodenseite von der Kathodenseite mittels einer durchgehenden Polymermembran getrennt, welche aber immer noch über katalytische Beschichtungen im Bereich der Reaktionsräume verfügen muss.

Hierzu sind Polymermembranen bekannt, welche in segmentierten Bereichen katalytisch beschichtet sind. Die Katalysatorschichten können hierbei segmentweise mittels Aufwalzen oder Heißverpressen auf der Polymermembran aufgetragen werden. Bei diesen mechanischen Aufbringungsverfahren sind zwischen den einzelnen benachbarten Katalysatorsegmenten Mindestabstände von mehreren Millimetern (etwa 3 mm) notwendig, um eine klare elektrische Trennung der einzelnen Segmente voneinander zu erreichen. Es entstehen zusätzliche Probleme dadurch, dass beim Auftrag (z.B. mittels Heißverpressen) sich die Membran erhitzt bzw. verformt und somit eine exakte Positionierung von Katalysatorsegment und Membran erschwert ist.

Ein grundsätzlicher Nachteil der bekannten Polymermembran mit Katalysatorsegmenten ist also, dass aufgrund der einzuhaltenden großen Mindestabstände zwischen den Katalysatorsegmenten Fläche ungenutzt bleibt, welche somit nicht zur Spannungserzeugung in miniaturisierten planaren Brennstoffzellen zur Verfügung steht.

Aus der EP 1 508 181 B1 ist ein Verfahren zur Herstellung von protonenleitenden Polymermembranen bekannt, bei dem eine ganzflächige Auftragung der Katalysatorschicht erfolgt. Diese wird dann im Anschluss zur Segmentierung der einzelnen Brennstoffzelleneinheiten teilweise wieder abgetragen. Die gemäß diesem Verfahren realisierbaren Abstände zwischen den einzelnen Brennstoffzelleneinheiten liegen jedoch bei etwa 200 bis 500 µm. Dadurch ergibt sich der Nachteil für Brennstoffzellen auf einer Membran des hohen Platzbedarfs der einzelnen Zelle, konstruktioneller Einschränkung und der schlechten Flächenausnutzung der Membranfläche. Dies führt dann zu einem schlechten Kosten-Nutzen-Verhältnis.

Ausgehend hiervon war es Aufgabe der vorliegenden Erfindung, Brennstoffzellenanordnungen bereitzustellen, die die aus dem Stand der Technik bekannten Nachteile beseitigen und eine höhere Effizienz bezüglich der Flächenausnutzung ermöglichen.

Diese Aufgabe wird durch die gattungsgemäße Brennstoffzellenanordnung mit den kennzeichnenden Merkmalen der Ansprüche 1 und durch das gattungsgemäße Verfahren mit den kennzeichnenden Merkmalen der Ansprüche 12 und 13 gelöst. Die weiteren abhängigen Ansprüche zeigen vorteilhafte Weiterbildungen auf.

Erfindungsgemäß wird eine Brennstoffzellenanordnung mit einer Polymerelektrolytmembran, mindestens zwei Stromkollektoren sowie mindestens einer Fluidverteilungsstruktur bereitgestellt. Auf der Oberfläche der Polymerelektrolytmembran ist zumindest einseitig bereichsweise eine Katalysatorschicht angeordnet. Die Brennstoffzellenanordnung ist dabei in einzelne elektrisch voneinander isolierte Brennstoffzellenbereiche unterteilt, wobei die Katalysatorschicht in den Bereichen der Unterteilung eine Unterbrechung von maximal 50 µm aufweist.

Überraschenderweise konnte festgestellt werden, dass bei der erfindungsgemäßen Brennstoffzellenanordnung der Einfluss der Ionenquerströme bei in Serie und parallel verschalteten Brennstoffzellen auf einer Membran einen deutlich geringeren Einfluss unter Last zeigt als bisher im Stand der Technik vermutet wurde (z.B. Ryan O'Hayre, Tibor Fabian, Sang-Joan Lee und Fritz B. Prinz., "Lateral Ionic Conduction in Planar Array Fuel Cells", Journal of the Electrochemical Society, 150(4):A430-A438, 2003).

Die erfindungsgemäße Lösung basiert darauf, dass eine vollständige elektrische Isolierung der einzelnen Brennstoffzellen ermöglicht wird, ohne dass zwingend eine Segmentierung der Katalysatorschicht erforderlich ist. So kann auf eine Segmentierung dann vollständig verzichtet werden, wenn die elektrische Leitfähigkeit der Katalysatorschicht um ein Vielfaches kleiner ist als die der angrenzenden schicht. Dies führt zu einer erheblichen Kostenreduktion und höheren Effizienz bei der Herstellung der Brennstoffzellen, z.B. kann bei der Herstellung auf den Arbeitsschritt der Katalysatorabtragung vollständig verzichtet werden. Ein weiterer Vorteil beruht darauf, dass verschiedene Klebstoffe auf der Katalysatorschicht besser haften als auf der Membran, wodurch die Lebensdauer der Brennstoffzellenanordnung erhöht wird.

Im Vergleich zu Brennstoffzellenanordnungen mit einer Segmentierung in der Größenordnung von 30 bis 50 µm treten bei Brennstoffzellenanordnungen ohne Segmentierung im Leerlauf lediglich minimale Verluste hinsichtlich der Spannung auf. Im Betriebspunkt ist sogar kein Unterschied zwischen segmentierten und unsegmentierten Brennstoffzellenanordnungen festzustellen. Die durch Ionenquerströme auftretenden Verluste können somit vernachlässigt werden.

Hieraus ergeben sich völlig neue Designvarianten für Brennstoffzellenmodule auf einer Membran. Die Zellenanordnung und die Zellengeometrie kann so unter den Aspekten der optimalen Platzausnutzung, der Temperaturregulierung, der Optimierung des Anpressdruckes oder der Anpassung an eine bestehende Gasverteilungsstruktur frei gewählt werden.

Da Brennstoffzellen pro aktiver Fläche eine definierte Leistung produzieren, kann gemäß der Brennstoffzellenanordnung die Membranfläche maximal genutzt und der jeweiligen Konstruktionsgeometrie angepasst werden. Weiter bringen die erfindungsgemäßen Brennstoffzellenanordnungen den Vorteil mit sich, dass durch eine geschickte Anordnung von in Serie und parallel verschalteten Brennstoffzellen zusätzlich eine homogene und/oder lokal angepasste Temperierung über die gesamte Brennstoffzellenanordnung möglich ist.

Eine weitere erfindungsgemäße Variante sieht vor, dass die Katalysatorschichten vollständig frei von Unterbrechungen sind. Hierfür ist es erforderlich, dass die Katalysatorschichten gegenüber den Stromkollektoren eine elektrische Leitfähigkeit aufweisen, die eine elektrische Isolierung der einzelnen Brennstoffzellen ermöglicht. Hierfür sollte die elektrische Leitfähigkeit der Katalysatorschicht um mindestens den Faktor 2 kleiner sein als die elektrische Leitfähigkeit des Stromkollektors.

Für die Katalysatorschicht gelten prinzipiell keine Einschränkungen, es können handelsübliche Fertigprodukte, z.B. eine Nafion®-Polymermembran (möglich sind auch andere Membran-Materialien, z.B. Poly-äther-Ätherketon (PEEK), PBI, PEEK mit sulfonisiertem Co-Polymer) mit beliebigen Katalysatorschichten genutzt werden. Üblicherweise sind diese Katalysatorschichten hoch porös und bestehen aus Edelmetallpartikeln (vorzugsweise Pt, Pt-Ru), Graphit sowie einem protonenleitenden Polymer. Die Dicke der unabgetragenen homogenen Katalysatorschicht, welche einseitig oder zweiseitig auf der Polymermenbran aufgetragen sein kann, beträgt vor dem bereichsweisen Abtragen vorzugsweise einheitlich 5 - 10 µm.

Vorzugsweise weist die Brennstoffzellenanordnung eine Gasdiffusionsschicht auf. Die Dicke der Gasdiffusionsschicht liegt bevorzugt im Bereich von 100 bis 400 µm, besonders bevorzugt im Bereich von 200 bis 300 µm.

Die Fläche mit Katalysatorschicht zwischen den Zellen sollte bei Segmentierungen in der Größenordnung von 30 bis 50 µm vorzugsweise mindestens um den Faktor 100 kleiner sein als die genutzte aktive Fläche der Brennstoffzellenanordnung mit Gasdiffusionsschicht und Stromkollektor.

Es ist weiter bevorzugt, dass die einzelnen Brennstoffzellen seriell oder parallel so verschaltet sind, dass eine homogene und/oder lokal angepasste Temperierung der Brennstoffzellenanordnung ermöglicht wird. Die Zelltemperaturen sind in Serienverschaltung bei gleicher Last höher als bei einer Parallelverschaltung. Durch die definierte Anordnung von seriell und parallel verschalteten Flächen kann so eine Temperaturregulierung erfolgen.

Weiterhin ist es bevorzugt, dass die Unterbrechungen der Katalysatoren zumindest, teilweise mit Mitteln zur Vergleichmäßigung des Anpressdrucks versehen sind. Es kann sich dabei um eine vollflächige Füllung der Unterbrechungen mit polymeren Materialien oder Klebstoffen handeln. Ebenso können auch vereinzelte Stege in den Unterbrechungen angeordnet sein.

Eine bevorzugte Variante sieht vor, dass die einer Brennstoffzelle zugeordneten Stromkollektoren zueinander kongruent angeordnet sind. Die Besonderheit bei der vorliegenden Erfindung ist es jedoch, dass es auch möglich ist, dass die einer Brennstoffzelle zugeordneten Stromkollektoren zueinander nicht kongruent angeordnet sind, was zusätzliche Freiheitsgrade hinsichtlich des Designs ermöglicht. Weiterhin ist es möglich, dass die Brennstoffzellenanordnung neben der klassischen planaren, also zweidimensionalen Anordnung, auch Brennstoffzellenanordnungen mit einer dreidimensionalen Geometrie erlaubt.

Erfindungsgemäß wird ebenso ein Verfahren zur Herstellung einer Brennstoffzellenanordnung, wie sie zuvor beschrieben wurde, bereitgestellt, bei dem auf der Polymerelektrolytmembran, auf deren Oberfläche zumindest einseitig bereichsweise mindestens eine Katalysatorschicht aufgebracht wird. Die Brennstoffzellenanordnung wird dann in einzelne elektrisch voneinander isolierte Brennstoff zellenbereiche unterteilt, wobei die Katalysatorschicht in den Bereichen der Unterteilung eine Unterbrechung von maximal 50 µm aufweist.

Erfindungsgemäß wird dies vorzugsweise durch den bereichsweisen Abtrag der Katalysatorschichten realisiert.

Grundsätzlich sind hierfür alle aus dem Stand der Technik bekannten Ätzverfahren einsetzbar. Hierzu zählen Barrel-Ätzen, Plasma-Ätzen, reaktives IonenÄtzen, reaktives Ionenstrahl-Ätzen, Sputter-Ätzen oder Ionenstrahl-Ätzen.

Eine besonders vorteilhafte Ausführungsform sieht vor, dass der bereichsweise Abtrag der Katalysatorschicht durch reaktives Ionenätzen erfolgt. Dies ist in einer handelsüblichen Plasmaanlage möglich (z.B. Oxford Plasmalab 80Plus) mit einer Maske, welche an Stellen Öffnungen hat, an denen die Katalysatorschicht abgetragen werden soll. Soll der Abtrag lediglich einseitig geschehen, ist es unter Umständen günstig, die gegenüberliegende Seite der Polymermembran zu kühlen, prinzipielle ist jedoch auch ein doppelseitiges Abtragen einer beidseitig beschichteten Polymermembran in einem Arbeitsgang möglich.

Eine weitere besonders vorteilhafte Weiterbildung sieht vor, dass der bereichsweise Abtrag der Katalysatorschicht durch Laserablation erfolgt. Hierbei sind die Parameter der Polymermembran (Material, Dicke) und des Lasers (Intensität, Wellenlänge, Pulsdauer und Leistungsdichte) vorzugsweise so zu wählen, dass die Polymermembran eine so große Transmission aufweist, dass eine beidseitig der Polymermembran liegende Katalysatorschicht durch Laserbestrahlung von lediglich einer Seite der beschichteten Polymermembran aus beidseitig bereichsweise entfernbar ist. Es ist selbstverständlich aber auch möglich, die Verfahrensparameter so einzustellen, dass die Katalysatorschicht lediglich auf einer Seite der Polymermembran entfernbar ist (z.B. wenn auf den gegenüberliegenden Seiten der Polymermembran leicht abweichende Strukturen hergestellt werden sollen). In der Regel ist ein Zusatz von Schutzgas sinnvoll, um Beschädigungen der Polymermembran bzw. der Katalysatorschicht zu vermeiden. Alternativ - und unter Umständen verfahrenstechnisch einfacher - ist es möglich, die MEA mit einer transparenten Scheibe bzw. Folie abzudecken, um den Sauerstofftransport zu unterbinden.

## Patentansprüche

1. Brennstoffzellenanordnung mit einer Polymerelektrolytmembran, auf zumindest einer deren
Oberfläche zumindest bereichsweise eine Katalysatorschicht angeordnet ist, mindestens zwei Stromkollektoren sowie mindestens einer Fluidverteilungsstruktur, wobei die Anordnung in einzelne elektrisch voneinander isolierte Brennstoffzellenbereiche unterteilt ist,
**dadurch gekennzeichnet,**
**dass** die Katalysatorschicht in den Bereichen der Unterteilung eine Unterbrechung von maximal 50 µm aufweist.

2. Brennstoffzellenanordnung nach Anspruch 1,
**dadurch gekennzeichnet, dass** die Katalysatorschichten in den Bereichen der Unterteilung eine Unterbrechung von maximal 30 µm aufweisen.

3. Brennstoffzellenanordnung mit einer Polymerelektrolytmembran, auf zumindest einer deren
Oberfläche zumindest bereichsweise eine Katalysatorschicht angeordnet ist, mindestens zwei Stromkollektoren sowie mindestens einer Fluidverteilungsstruktur, wobei die Anordnung in einzelne elektrisch voneinander isolierte Brennstoffzellenbereiche unterteilt ist, **dadurch gekennzeichnet, dass** die Katalysatorschichten frei von Unterbrechungen sind, wobei die Katalysatorschichten gegenüber den Stromkollektoren eine elektrische Leitfähigkeit aufweisen, die eine elektrische Isolierung der einzelnen Brennstoffzellen realisiert.

4. Brennstoffzellenanordnung nach einem der vorhergehenden Ansprüche,
**dadurch gekennzeichnet, dass** die Katalysatorschichten porös sind und aus Edelmetallpartikeln, Graphit sowie einem protonenleitenden Polymer bestehen.

5. Brennstoffzellenanordnung nach einem der vorhergehenden Ansprüche,
**dadurch gekennzeichnet, dass** die Katalysatorschichten eine Dicke im Bereich von 5 bis 10 µm aufweisen.

6. Brennstoffzellenanordnung nach einem der vorhergehenden Ansprüche,
**dadurch gekennzeichnet, dass** zwischen den Katalysatorschichten und den Stromkollektoren bzw. der Fluidverteilungsstruktur Gasdiffusionsschichten angeordnet sind.

7. Brennstoffzellenanordnung nach einem der vorhergehenden Ansprüche,
**dadurch gekennzeichnet, dass** die einzelnen Brennstoffzellen seriell oder parallel so verschaltet sind, dass eine homogene Temperierung der Brennstoffzellenanordnung ermöglicht wird.

8. Brennstoffzellenanordnung nach einem der vorhergehenden Ansprüche,
**dadurch gekennzeichnet, dass** die Unterbrechungen zumindest teilweise mit Mitteln zur Vergleichmäßigung des Anpressdrucks, insbesondere Stege
oder Klebstoffe, versehen sind.

9. Brennstoffzellenanordnung nach einem der vorhergehenden Ansprüche,
**dadurch gekennzeichnet, dass** die einer Brennstoffzelle zugeordneten Stromkollektoren zueinander kongruent angeordnet sind.

10. Brennstoffzellenanordnung nach einem der Ansprüche 1 bis 8,
**dadurch gekennzeichnet, dass** die einer Brennstoffzelle zugeordneten Stromkollektoren zueinander nicht kongruent angeordnet sind.

11. Brennstoffzellenanordnung nach einem der vorhergehenden Ansprüche,
**dadurch gekennzeichnet, dass** die Brennstoffzellenanordnung eine zwei- oder dreidimensionale Geometrie aufweist.

12. Verfahren zur Herstellung einer Brennstoffzellenanordnung nach Anspruch 1, bei dem auf zumindest einer Oberfläche der Polymerelektrolytmembran zumindest bereichsweise eine Katalysatorschicht homogen aufgebracht und die Brennstoffzellenanordnung in einzelne elektrisch voneinander isolierte Brennstoffzellenbereiche unterteilt wird,
**dadurch gekennzeichnet, dass** die Katalysatorschicht in den Bereichen der Unterteilung eine Unterbrechung von maximal 50 µm aufweist.

13. Verfahren zur Herstellung einer Brennstoffzellenanordnung nach Anspruch 3,
**dadurch gekennzeichnet, dass** die Katalysatorschichten frei von Unterbrechungen sind, wobei die Katalysatorschichten gegenüber den Stromkollektoren eine elektrische Leitfähigkeit aufweisen, die eine elektrische Isolierung der einzelnen Brennstoffzellen realisiert.

14. Verfahren zur Herstellung nach Anspruch 13,
**dadurch gekennzeichnet, dass** die Unterbrechungen durch bereichsweisen Abtrag der Katalysatorschichten erfolgen.

15. Verfahren nach Anspruch 14,
**dadurch gekennzeichnet, dass** der Abtrag durch Laserablation, Barrel-Ätzen, Plasma-Ätzen, reaktives Ionen-Ätzen, reaktives Ionenstrahl-Ätzen, Sputter-Ätzen oder Ionenstrahl-Ätzen erfolgt.

## Claims

1. Fuel cell arrangement with a polymer electrolyte membrane which on at least one of its surfaces, at least in certain sections, has a catalyst layer disposed thereon, at least two current collectors as well as at least one fluid distribution structure, wherein the arrangement is divided into individual fuel cell sections which are electrically insulated from one another,
**characterized in that** the catalyst layer has a discontinuity of 50 µm at maximum in the sections of division.

2. Fuel cell arrangement according to claim 1,
**characterized in that** the catalyst layers exhibit a discontinuity of 30 µm at maximum in the sections of division.

3. Fuel cell arrangement with a polymer electrolyte membrane which on at least one of its surfaces, at least in sections, has a catalyst layer arranged thereon, at least two current collectors as well as at least one fluid distribution structure, wherein the arrangement is divided into individual fuel cell sections which are electrically insulated from one another,
**characterized in that** the catalyst layers are free from discontinuities, wherein the catalyst layers exhibit an electrical conductivity vis-à-vis the current collectors, which realizes an electrical insulation of the individual fuel cells.

4. Fuel cell arrangement according to any of the preceding claims, **characterized in that** the catalyst layers are porous and consists of noble metal particles, graphite as well as a proton-conducting polymer.

5. Fuel cell arrangement according to any of the preceding claims, **characterized in that** the catalyst layers exhibit a thickness in the range between 5 to 10 µm.

6. Fuel cell arrangement according to any of the preceding claims, **characterized in that** gas diffusion layers are disposed between the catalyst layers and the current collectors and the fluid distribution structure, respectively.

7. Fuel cell arrangement according to any of the preceding claims, characterized in thatthe individual fuel cells are connected serial or parallel in such a manner that homogenous tempering of the fuel cell arrangement can be realized.

8. Fuel cell arrangement according to any of the preceding claims, **characterized in that** the discontinuities are at least partially furnished with means for equalizing the contact pressure, in particular webs or adhesives.

9. Fuel cell arrangement according to any of the preceding claims, **characterized in that** the current collectors assigned to one fuel cell are disposed congruently to one another.

10. Fuel cell arrangement according to any of claims 1 to 8, **characterized in that** the current collectors which are assigned to one fuel cell are not disposed congruently to one another.

11. Fuel cell arrangement according to any of the preceding claims, **characterized in that** the fuel cell arrangement exhibits a two-dimensional or three-dimensional geometry.

12. Method of producing a fuel cell arrangement according to claim 1, wherein a catalyst layer is homogeneously applied onto at least one surface of the polymer electrolyte membrane, at least in certain sections, and the fuel cell arrangement is divided into individual fuel cell sections which are electrically insulated from one another, **characterized in that** the catalyst layer exhibits a discontinuity of 50 µm at maximum in the sections of divisions.

13. Method of producing a fuel cell arrangement according to claim 3, **characterized in that** the catalyst layers are free from discontinuities, wherein the catalyst layers exhibit an electrical conductivity vis-à-vis the current collectors, which realizes an electrical insulation of the individual fuel cells.

14. Production method according to claim 13,
**characterized in that** the discontinuities are created by sectionwise removal of the catalyst layers.

15. Method according to claim 14,
**characterized in that** the removal takes place using laser ablation, barrel etching, plasma etching, reactive ion etching, reactive ion beam etching, sputter etching or ion beam etching.

## Revendications

1. Dispositif de pile à combustible avec une membrane en électrolyte polymère, sur au moins une surface de laquelle une couche de catalyseur est disposée au moins partiellement, au moins deux collecteurs de courant ainsi qu'au moins une structure de répartition de fluide, ce dispositif étant divisé en parties de pile à combustible individuelles isolées électriquement les unes des autres **caractérisé en ce que**
la couche de catalyseur comprend, dans les zones de la division, une interruption de 50 µm maximum.

2. Dispositif de pile à combustible selon la revendication 1, **caractérisé en ce que** les couches de catalyseurs comprennent, dans les zones de la division, une interruption de 30 µm maximum.

3. Dispositif de pile à combustible avec une membrane en électrolyte polymère, sur au moins une surface de laquelle une couche de catalyseur est disposée au moins partiellement, au moins deux collecteurs de courant ainsi qu'au moins une structure de répartition de fluide, ce dispositif étant divisé en parties de pile à combustible individuelles isolées électriquement les unes des autres **caractérisé en ce que** les couches de catalyseurs sont exemptes d'interruption, les couches de catalyseurs comprenant, par rapport aux collecteurs de courants, une conductivité électrique qui réalise une isolation électrique des piles à combustible individuelles.

4. Dispositif de pile à combustible selon l'une des revendications précédentes, **caractérisé en ce que** les couches de catalyseurs sont poreuses et sont constituées de particules de métaux nobles, du graphite ainsi que d'un polymère conduisant les protons.

5. Dispositif de pile à combustible selon l'une des revendications précédentes, **caractérisé en ce que** les couches de catalyseurs présentent une épaisseur de l'ordre de 5 à 10 µm.

6. Dispositif de pile à combustible selon l'une des revendications précédentes, **caractérisé en ce que**, entre les couches de catalyseurs et les collecteurs de courant ou la structure de répartition de fluide, se trouvent des couches de diffusion de gaz.

7. Dispositif de pile à combustible selon l'une des revendications précédentes, **caractérisé en ce que** les différentes piles à combustible sont connectées en série ou en parallèle de façon à ce qu'une régulation de température homogène du dispositif de pile à combustible soit possible.

8. Dispositif de pile à combustible selon l'une des revendications précédentes, **caractérisé en ce que** les interruptions sont munies au moins partiellement de moyens pour l'uniformisation de la pression de compression, plus particulièrement des nervures ou des adhésifs.

9. Dispositif de pile à combustible selon l'une des revendications précédentes, **caractérisé en ce que** les collecteurs de courant correspondant à une pile à combustible sont disposés de manière congruente entre eux.

10. Dispositif de pile à combustible selon l'une des revendications 1 à 8, **caractérisé en ce que** les collecteurs de courant correspondant à une pile à combustible sont disposés de manière non congruente entre eux.

11. Dispositif de pile à combustible selon l'une des revendications précédentes, **caractérisé en ce que** le dispositif de pile à combustible présente une géométrie bi- ou tridimensionnelle.

12. Procédé de fabrication d'un dispositif de pile à combustible selon la revendication 1, dans lequel, sur au moins une surface de la membrane en électrolyte polymère, est appliquée, de manière homogène, au moins partiellement, une couche de catalyseur et le dispositif de pile à combustible est divisé en différentes parties de pile à combustibles individuelles isolées électriquement entre elles, **caractérisé en ce que** la couche de catalyseur présente, dans les zones de la division, une interruption de 50 µm maximum.

13. Procédé de fabrication d'un dispositif de pile à combustible selon la revendication 3, **caractérisé en ce que** les couches de catalyseurs sont exemptes d'interruptions, les couches de catalyseurs présentant, par rapport aux collecteurs de courant, une conductivité électrique qui réalise une isolation électrique des piles à combustibles individuelles.

14. Procédé de fabrication selon la revendication 13, **caractérisé en ce que** les interruptions sont réalisées par enlèvement des couches de catalyseurs.

15. Procédé selon la revendication 14, **caractérisé en ce que** l'enlèvement est effectué par ablation laser, gravure par baril, gravure au plasma, gravure par ions réactifs, gravure par faisceau d'ions réactif, gravure par pulvérisation ou gravure par faisceau d'ions.
